# FASCICULE DE BREVET EUROPEEN

(11) **EP 1 248 172 B1**
(45) Date de publication et mention de la délivrance du brevet: **19.10.2016**
(21) Numéro de dépôt: 02290331.4
(22) Date de dépôt: 12.02.2002
(51) Int. Cl.: G05D 1/00

(54) **Dispositif de surveillance d'une pluralité de systèmes d'un aéronef, en particulier d'un avion de transport**
Einrichtung zur Überwachung einer Mehrzahl von Systemen in einem Luftfahrzeug, insbesondere einem Transportflugzeug
Device for monitoring a plurality of systems of an aircraft, in particular of a transport aeroplane

(30) Priorité: 26.02.2001 FR 0102570
(43) Date de publication de la demande: 09.10.2002
(73) Titulaire: AIRBUS OPERATIONS (SAS), 31060 Toulouse (FR)
(72) Inventeur: Le Draoullec, Christine, 31830 Plaisance du Touch (FR); Mailhou, Philippe, 31490 Leguevin (FR)
(74) Mandataire: Gevers & Orès

(56) Documents cités:
- EP-A- 0 974 885
- FR-A1- 2 700 403
- US-A- 5 522 026
- MORGAN J ET AL: "MD-11 AIRCRAFT ALERTING FUNCTION" SCIENTIFIC HONEYWELLER, HONEYWELL'S CORPORATE. MINNEAPOLIS, US, 1993, pages 60-65, XP000429068 ISSN: 0196-8440
- MORGAN ET AL: "MD-11 Electronic Instrument System" PROCEEDINGS OF THE DIGITAL AVIONICS SYSTEMS CONFERENCE. SEATTLE, OCT. 5 - 8, 1992, NEW YORK, IEEE, US, vol. CONF. 11, 5 octobre 1992 (1992-10-05), pages 248-253, XP010106756 ISBN: 0-7803-0820-4
- SHANEYFELT W: "THE HELICOPTER PILOT'S EMERGENCY SITUATION ADVISOR" SCIENTIFIC HONEYWELLER, HONEYWELL'S CORPORATE. MINNEAPOLIS, US, vol. 9, no. 1, 21 juin 1988 (1988-06-21), pages 43-49, XP000128049 ISSN: 0196-8440

## Description

La présente invention concerne un dispositif de surveillance d'une pluralité de systèmes d'un aéronef, notamment d'un avion de transport. Le document US5522026 divulgue un exemple d'un tel dispositif de l'art antérieur.

Plus particulièrement, bien que non exclusivement, ledit dispositif de surveillance est un dispositif centralisé du type ECAM ("Electronic Centralized Aircraft Monitoring") qui surveille de façon automatique une pluralité de systèmes (moteurs, gouvernes, ...) de l'aéronef et qui informe l'équipage de l'état de ces systèmes.

On sait qu'un tel dispositif de surveillance comporte notamment au moins :
- une unité de surveillance pour surveiller lesdits systèmes et pour détecter une éventuelle panne d'un desdits systèmes ; et
- des moyens d'affichage reliés à ladite unité de surveillance et susceptibles de présenter sur au moins un écran de visualisation :
   - des informations relatives à la surveillance desdits systèmes ; et
   - lors de la détection d'une panne d'un desdits systèmes, des informations relatives à ladite panne, ainsi qu'à une procédure de traitement de panne correspondante comprenant une liste d'actions devant être réalisées par au moins un opérateur.

Généralement, lesdits moyens d'affichage présentent en particulier les types d'informations suivants :
- des synoptiques représentant les différents systèmes surveillés ;
- des informations prévenant d'une possible panne, notamment lorsqu'un paramètre particulier qui est surveillé s'approche de ses valeurs limites ou les dépasse. Dans ce cas, généralement, lesdits moyens d'affichage affichent une page présentant ce paramètre qui, de plus, est mis en évidence par un clignotement, pour attirer l'attention de l'équipage ;
- des messages relatifs à des fonctions particulières (par exemple le dégivrage des moteurs) qui peuvent être activées de façon temporaire et qui en l'occurrence sont activées. Ces messages sont bien entendu uniquement affichés le temps que les fonctions correspondantes restent activées ; et
- des informations réglementaires, telles que la poussée des moteurs, la quantité de carburant restante ou la configuration aérodynamique, qui sont affichées quant à elles en permanence.

En outre, lorsqu'une panne d'un système est détectée par un tel dispositif de surveillance, ce dernier :
- alerte l'équipage par des moyens sonore et/ou visuel ;
- identifie la panne et affiche sur ledit écran de visualisation le synoptique correspondant au système en panne. Tous les affichages indiqués ci-après sont réalisés sur ledit écran de visualisation ;
- vérifie si la panne est isolée ou si d'autres systèmes sont touchés par cette panne et le cas échéant affiche la liste des systèmes qui sont également touchés ;
- affiche la procédure de traitement de panne correspondante, comprenant une pluralité d'actions particulières, qui doivent être réalisées, par un opérateur ou l'équipage de l'aéronef, pour isoler la panne et la traiter afin de pouvoir poursuivre le vol ;
- gère ladite procédure de traitement de panne au fur et à mesure que l'opérateur ou l'équipage effectue les différentes actions, en effaçant de façon automatique une action de l'écran de visualisation dès qu'il détecte que cette action a été réalisée ; et
- lorsque la panne est traitée, affiche un bilan opérationnel de l'avion comprenant notamment les limitations à respecter (vitesse maximale, altitude maximale, ...) pour la suite du vol, les systèmes et/ou les fonctions qui sont inopérants, ...

Un tel dispositif de surveillance présente quelques inconvénients. En particulier, lors de l'exécution d'une procédure de traitement de panne qui est présentée et gérée par ledit dispositif de surveillance :
- lorsqu'une action a été réalisée, elle disparaît automatiquement de l'écran de visualisation. Par conséquent, parmi les opérateurs de l'aéronef (pilote, copilote), l'opérateur qui ne s'occupe pas de la procédure de traitement de panne (et parfois même l'opérateur qui s'en occupe), ne sait pas toujours quelle(s) action(s) a(ont) été réalisée(s) et effacée(s) et a donc du mal à évaluer l'avancée effective de ladite procédure de traitement de panne ; et de plus
- comme de façon usuelle la réalisation de certaines actions n'est pas détectée de façon automatique, c'est-à-dire ne peut pas être détectée par ledit dispositif de surveillance, une telle action (dont la réalisation est indétectable) reste toujours affichée sur l'écran de visualisation, même si elle a été bien réalisée. Dans ce cas, l'opérateur ou l'équipage doit mémoriser toutes les actions (non détectées de façon automatique) qu'il a effectivement réalisées, ce qui nécessite une attention soutenue de sa part.

La présente invention concerne un dispositif de surveillance du type décrit précédemment, qui permet de remédier aux inconvénients précités.

A cet effet, selon l'invention, ledit dispositif de surveillance du type comportant au moins :
- une unité de surveillance pour surveiller lesdits systèmes et pour détecter une éventuelle panne d'un desdits systèmes ; et
- des moyens d'affichage reliés à ladite unité de surveillance et susceptibles de présenter sur au moins un écran de visualisation des informations relatives à la surveillance desdits systèmes et, lors de la détection d'une panne d'un desdits systèmes, des informations relatives à ladite panne, ainsi qu'au moins une procédure de traitement de panne correspondante comprenant au moins une liste d'actions devant être réalisées par au moins un opérateur,
   à savoir le cas échéant une liste des actions déjà réalisées concernant ladite procédure de traitement de panne, et le cas échéant une liste des actions devant encore être réalisées concernant ladite procédure de traitement de panne, en mettant en évidence la prochaine action devant être réalisée, ainsi qu'au moins un signe caractéristique signalant le terme d'une procédure de traitement de panne ;
- un moyen d'information susceptible d'être actionné par ledit opérateur et permettant à ce dernier d'informer ledit dispositif de surveillance, le cas échéant, de la réalisation d'au moins une action particulière relative à ladite procédure de traitement de panne ;
- un moyen de validation susceptible d'être actionné par ledit opérateur et permettant à ce dernier de valider des informations qu'il a fournies audit dispositif de surveillance, des informations précédemment fournies n'étant prises en compte par ledit dispositif de surveillance que si elles ont été effectivement validées par l'opérateur, est remarquable en ce que ledit dispositif de surveillance est un dispositif du type ECAM, en ce que lesdits moyens d'affichage présentent, dès la détection d'une panne et au moins pendant toute la procédure de traitement de panne correspondante, sur ledit écran de visualisation, au moins une information identifiant ladite procédure de traitement de panne,
et en ce que ledit dispositif de surveillance comportant, de plus :
- un moyen d'effacement susceptible d'être actionné par ledit opérateur et formé de manière à permettre d'effacer sur ledit écran de visualisation toutes les informations relatives à une procédure de traitement de panne ;
- un moyen d'information susceptible d'être actionné par ledit opérateur et permettant à ce dernier d'informer ledit dispositif de surveillance de la survenue d'une panne qui ne peut pas être détectée par l'unité de surveillance ; et
- un moyen d'interrogation susceptible d'être actionné par ledit opérateur et permettant à ce dernier de demander audit dispositif de surveillance que les moyens d'affichage présentent sur ledit écran de visualisation la procédure de traitement de panne relative à la panne signalée à l'aide dudit moyen d'information.

Ainsi, grâce à l'invention, les différents opérateurs (pilote, copilote, ...) connaissent en permanence de façon précise les actions déjà réalisées et celles devant encore être réalisées, et donc l'état d'avancée de la procédure de traitement de panne, sans avoir à mémoriser ces actions, ce qui augmente bien entendu le confort des opérateurs dans l'exécution de ces actions, leur permet de focaliser leur attention et leur mémoire sur d'autres informations, et évite des contrôles et/ou des actions non nécessaires.

De plus, les informations qui sont présentées par les moyens d'affichage illustrent précisément l'état de l'avancée effective de la procédure de traitement de panne, puisque, grâce audit moyen d'information, l'opérateur peut informer le dispositif de surveillance de la réalisation d'une action particulière (du type indétectable précité) que ce dernier n'aurait pas pu détecter automatiquement. Le dispositif de surveillance sait ainsi précisément quelles sont les actions qui ont été réalisées, soit parce qu'il a effectivement détecté leur réalisation, soit parce que l'opérateur l'a informé des réalisations de ces actions.

Selon l'invention, lesdits moyens d'affichage présentent, lors de l'existence d'une pluralité de procédures de traitement de panne, toutes lesdites procédures sur l'écran de visualisation dans un ordre de priorité, et ledit dispositif de surveillance comporte de plus un moyen pour indiquer sur ledit écran de visualisation, la procédure à traiter, c'est-à-dire qui doit être traitée en priorité parmi toutes les procédures affichées. Ceci permet dans une situation de stress, de guider le pilote dans l'exécution des procédures. Ceci est particulièrement avantageux par rapport à certains dispositifs usuels qui présentent la liste des différentes procédures à exécuter et demandent au pilote de choisir celle qu'il traitera en premier.

En outre, avantageusement, lesdits moyens d'affichage présentent sur ledit écran de visualisation, lorsqu'une procédure de traitement de panne est terminée, au moins un signe caractéristique signalant le terme de cette procédure de traitement de panne, et ledit dispositif de surveillance comporte, de plus, un moyen d'effacement susceptible d'être actionné par ledit opérateur et permettant à ce dernier d'effacer sur ledit écran de visualisation toutes les informations relatives à une procédure de traitement de panne.

Par ailleurs, de façon avantageuse, lesdits moyens d'affichage présentent en permanence sur ledit écran de visualisation les nouvelles limitations à respecter en raison d'une panne, dès que ces nouvelles limitations sont connues. Ainsi, malgré les modifications qui ont pu être engendrées par la panne, l'équipage est en permanence informé des limitations à respecter pour la suite du vol, ce qui est une garantie de sécurité.

On sait que certaines procédures de traitement de panne comprennent des étapes conditionnelles, c'est-à-dire que la ou les actions à réaliser à une telle étape (conditionnelle) dépendent d'au moins une condition particulière (par exemple "si la condition X est vérifiée, alors réaliser l'action A, sinon réaliser l'action B"). A cet effet, il est nécessaire de savoir si une condition particulière est vérifiée ou non, ou quelle condition parmi plusieurs est vérifiée. Or, le dispositif de surveillance n'est pas toujours en mesure d'identifier automatiquement la condition effective. Dans une telle situation, avec les dispositifs de surveillance usuels, c'est à l'opérateur de déterminer les actions à réaliser et celles à ignorer.

Selon l'invention, ledit dispositif de surveillance comporte, de plus, un moyen de sélection susceptible d'être actionné par ledit opérateur et permettant à ce dernier de sélectionner, dans une procédure de traitement de panne conditionnelle comprenant une pluralité de conditions, l'une desdites conditions, et lesdits moyens d'affichage présentent sur ledit écran de visualisation les différentes conditions possibles et mettent en évidence sur ledit écran de visualisation, après la sélection d'une condition particulière par l'intermédiaire dudit moyen de sélection, les actions à réaliser pour cette condition. Par conséquent, il suffit à l'opérateur de sélectionner la condition appropriée et les moyens d'affichage lui présentent les actions devant être réalisées pour la condition ainsi sélectionnée. La fonction d'aide au traitement de la panne est donc améliorée par la présente invention.

De plus, ledit dispositif de surveillance comporte, avantageusement, un moyen d'annulation susceptible d'être actionné par ledit opérateur et permettant à ce dernier d'annuler le cas échéant la sélection antérieure d'une condition dans une procédure de traitement de panne conditionnelle.

En outre, avantageusement, ledit dispositif de surveillance comporte, de plus, un moyen d'effacement susceptible d'être actionné par ledit opérateur et permettant à ce dernier d'effacer des informations présentées sur ledit écran de visualisation, et lesdits moyens d'affichage mettent en évidence sur ledit écran de visualisation, parmi les informations qui y sont présentées, celles qui sont susceptibles d'être effacées par ledit moyen d'effacement. Ainsi, l'opérateur connaît parfaitement les informations qu'il peut effacer à l'aide dudit moyen d'effacement. Ceci permet d'éviter qu'il n'efface de façon involontaire des informations pouvant être utiles pour la suite du vol.

Par ailleurs, de façon avantageuse, le dispositif de surveillance conforme à l'invention comporte, de plus, un moyen d'information susceptible d'être actionné par ledit opérateur et permettant à ce dernier d'informer ledit dispositif de surveillance de la survenue d'une panne et un moyen d'interrogation susceptible d'être actionné par ledit opérateur et permettant à ce dernier de demander audit dispositif de surveillance que les moyens d'affichage présentent sur ledit écran de visualisation la procédure de traitement de panne relative à ladite panne. Ceci permet de prendre en compte des pannes ou incidents qui ne sont pas détectables par le dispositif de surveillance, mais qui peuvent être détectés par un opérateur, telles que la présence d'un pare-brise fêlé par exemple.

Dans un mode de réalisation particulier, le dispositif de surveillance conforme à l'invention comporte, de plus, un moyen d'interrogation susceptible d'être actionné par ledit opérateur et permettant à ce dernier de demander des informations supplémentaires relatives à une panne, et lesdits moyens d'affichage présentent sur ledit écran de visualisation des informations supplémentaires relatives à une panne, en réponse à un actionnement dudit moyen d'interrogation par ledit opérateur.

Par ailleurs, avantageusement, lesdits moyens d'affichage présentent sur ledit écran de visualisation, pour une procédure de traitement de panne, le cas échéant des actions différées correspondant à des actions devant être réalisées ultérieurement, et ledit dispositif de surveillance comporte, de plus, un moyen de validation susceptible d'être actionné par ledit opérateur et permettant à ce dernier de valider ces actions différées pour les réaliser (immédiatement) à partir de ladite validation.

Dans un mode de réalisation particulier, le dispositif de surveillance conforme à l'invention comporte, de plus, une base de données comprenant des listes d'opérations à vérifier ("check list") et des moyens, automatiques ou manuels, permettant de commander lesdits moyens d'affichage pour qu'ils présentent sur ledit écran de visualisation au moins l'une desdites listes. Il s'agit de listes d'opérations à vérifier qui sont généralement établies à partir de préconisations faites par le constructeur de l'avion, et qui sont adaptées aux souhaits spécifiques des compagnies aériennes. Ces listes d'opérations à vérifier se trouvent habituellement sur un support papier et leur présentation conformément à l'invention sur l'écran de visualisation permet de faciliter leur lecture et leur exploitation.

De préférence, le dispositif de surveillance conforme à l'invention comporte de plus des moyens pour corriger automatiquement ces listes d'opérations à vérifier, lors d'une panne, pour tenir compte des effets engendrés par cette panne sur lesdites listes.

Par ailleurs, pour des raisons de sécurité, ledit dispositif de surveillance comporte, de plus, un moyen de validation susceptible d'être actionné par ledit opérateur et permettant à ce dernier de valider des informations qu'il a fournies audit dispositif de surveillance.

En outre, avantageusement, ledit dispositif de surveillance comporte de plus :
- un moyen de rappel susceptible d'être actionné par ledit opérateur et permettant à ce dernier :
   - par un premier actionnement, de rappeler à l'écran de visualisation le cas échéant la dernière procédure effacée ; et
   - par un second actionnement, de rappeler à l'écran de visualisation le cas échéant l'ensemble des procédures effacées depuis le début du vol de l'aéronef ; et/ou
- un moyen de rappel susceptible d'être actionné par ledit opérateur et permettant à ce dernier de rappeler à l'écran de visualisation le cas échéant toutes les actions différées qui ont été effacées et qui ne sont pas encore exécutées.

Les figures du dessin annexé feront bien comprendre comment l'invention peut être réalisée. Sur ces figures, des références identiques désignent des éléments semblables.
La figure 1 est le schéma synoptique d'un dispositif de surveillance conforme à l'invention.
La figure 2 montre schématiquement un exemple de réalisation d'un dispositif de surveillance conforme à l'invention.
Les figures 3 à 8 montrent schématiquement différentes présentations d'informations sur un écran de visualisation d'un dispositif de surveillance conforme à l'invention, permettant de bien expliquer les caractéristiques et les avantages de ce dernier.

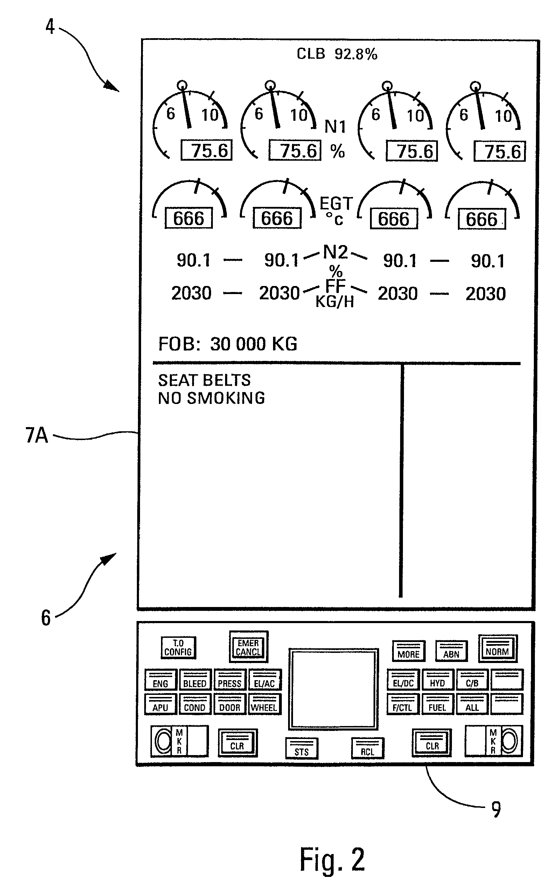

Les figures 2 à 8 comportent des indications telles qu'elles peuvent apparaître en réalité sur un dispositif de surveillance d'un avion de ligne. C'est pourquoi ces indications apparaissent sous forme de mots anglais ou d'abréviations issues de l'anglais, tels qu'utilisés dans la réalité et auxquels l'homme du métier est plus habitué qu'à des indications en français. Ces mots ou ces abréviations sont bien connus et compris par les utilisateurs (pilote, ...) et les constructeurs de dispositifs de surveillance pour avions de ligne, c'est pourquoi leur transcription en langue française n'est faite dans la description suivante que si une telle présentation s'avère utile ou nécessaire pour expliquer les particularités de la présente invention.

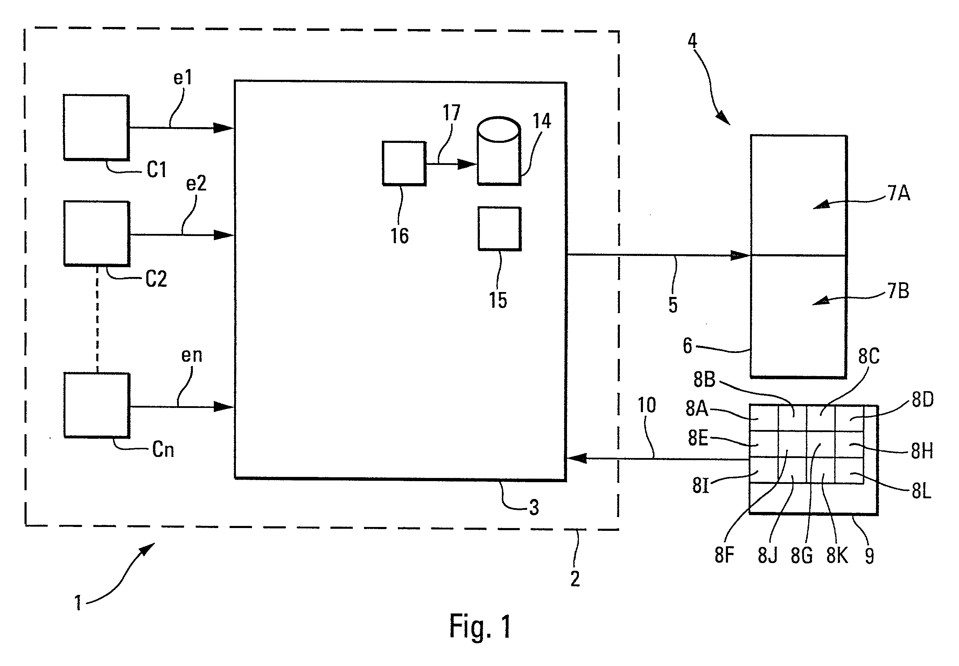

Le dispositif de surveillance 1 conforme à l'invention et représenté schématiquement sur la figure 1 est destiné à la surveillance d'une pluralité de systèmes, tels que les moteurs, les gouvernes et/ou l'éclairage d'un aéronef, en particulier d'un avion de transport civil. Ce dispositif de surveillance 1 qui est, de préférence, un dispositif centralisé du type ECAM ("Electronic Centralized Aircraft Monitoring"), informe l'équipage de l'aéronef de l'état de ces systèmes.

Un tel dispositif de surveillance 1 comporte de façon connue :
- une unité de surveillance 2 qui comprend :
   - une pluralité de capteurs ou de moyens de surveillance C1 à Cn qui surveillent le fonctionnement des différents systèmes, notamment en mesurant des paramètres particuliers, telle que la poussée des moteurs par exemple. Ces moyens de surveillance C1 à Cn peuvent notamment être intégrés dans lesdits systèmes ; et
   - une unité centrale 3 qui comporte un calculateur, qui est reliée par l'intermédiaire de liaisons e1 à en, respectivement auxdits moyens de surveillance C1 à Cn, et qui gère ou traite les informations reçues desdits moyens de surveillance C1 à Cn,
   ladite unité de surveillance 2 étant susceptible de détecter une panne d'un desdits systèmes, soit directement par l'intermédiaire d'un moyen de surveillance C1 à Cn, soit à partir d'un traitement réalisé par l'unité centrale 3 ; et
- des moyens d'affichage 4 de type usuel, qui sont reliés à ladite unité centrale 3 par l'intermédiaire d'une liaison 5 et qui sont susceptibles de présenter sur au moins un écran de visualisation 6 :
   - des informations relatives à la surveillance desdits systèmes ; et
   - lors de la détection d'une panne d'un desdits systèmes, des informations relatives à ladite panne, ainsi qu'à une procédure de traitement de panne correspondante comprenant une liste d'actions devant être réalisées par au moins un opérateur.

Ledit écran de visualisation 6 peut comporter plusieurs fenêtres de visualisation 7A, 7B. De préférence, il comporte deux fenêtres superposées 7A et 7B.

Sur la figure 2, on a représenté sur une fenêtre 7A des types d'informations susceptibles d'être présentées par les moyens d'affichage 4 à l'équipage, en l'absence de panne des différents systèmes qui sont surveillés.

En l'occurrence, il s'agit à titre d'illustration :
- d'informations réglementaires qui sont affichées en permanence telles que :
   - la montée CLB ("climb") ;
   - la vitesse de rotation N1 du module de basse pression des moteurs ;
   - la température de sortie des gaz des moteurs EGT ("Exhaust Gas Temperature") ;
   - la vitesse de rotation N2 du module de haute pression des moteurs ;
   - le flux de carburant FF ("Fuel Flow"), les paramètres N1, EGT, N2 et FF étant présentés pour chacun des quatre moteurs de l'aéronef ; et
   - la masse de carburant restante FOB ("Fuel On Board") ; et
- de messages informant de l'existence de fonctions particulières qui sont activées de façon temporaire, tels que des indicateurs lumineux demandant aux passagers de mettre leurs ceintures de sécurité ("SEAT BELTS") et de ne pas fumer ("NO SMOKING").

Par ailleurs, lorsqu'une panne d'un système est détectée, ledit système de surveillance 1 réalise de façon usuelle les opérations suivantes :
- il alerte l'équipage par des moyens sonore et/ou visuel non représentés ;
- il identifie la panne ;
- il vérifie si la panne est isolée ou si d'autres systèmes sont touchés par cette panne et le cas échéant affiche la liste des systèmes qui sont également touchés ;
- il affiche la procédure de traitement de panne correspondante, comprenant une pluralité d'actions particulières, qui doivent être réalisées par un opérateur (pilote, copilote, ...) ou l'équipage de l'aéronef, pour isoler la panne et la traiter afin de pouvoir poursuivre le vol ;
- il gère ladite procédure de traitement de panne au fur et à mesure que l'opérateur ou l'équipage effectue les différentes actions, comme précisé ci-dessous ; et
- lorsque la panne est traitée, il affiche un bilan opérationnel de l'avion comprenant notamment les limitations à respecter (vitesse maximale, altitude maximale, ...) pour la suite du vol, les systèmes et/ou les fonctions qui sont inopérants, ...

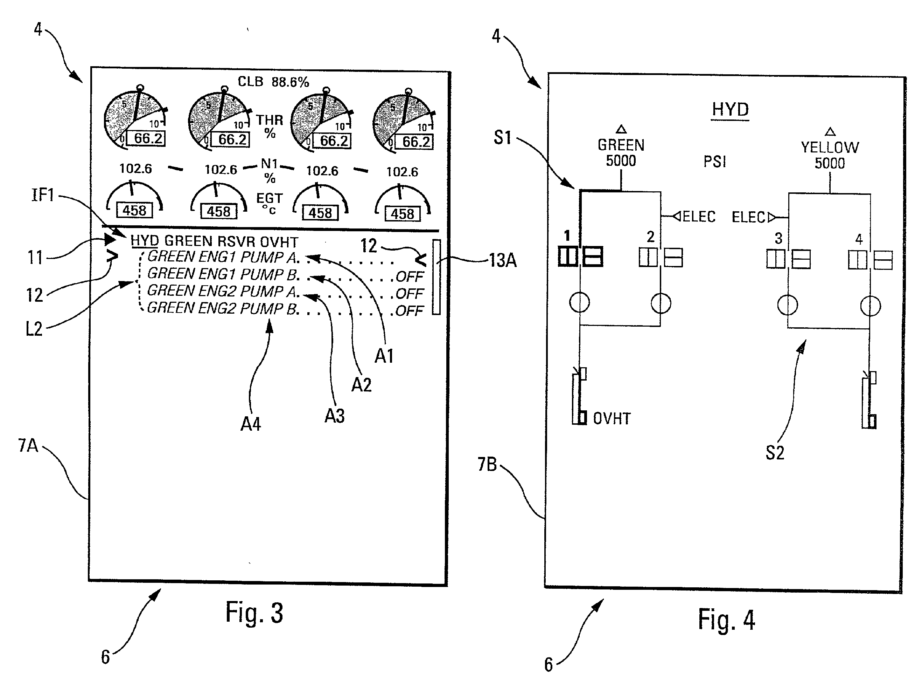

Pour ce faire, selon l'invention :
- lesdits moyens d'affichage 4 présentent, dès la détection d'une panne et au moins pendant toute la procédure de traitement de panne correspondante, sur ledit écran de visualisation 6, comme on peut le voir sur les figures 3, 5 et 6 montrant la fenêtre 7A, au moins :
   - une information IF1 identifiant ladite procédure de traitement de panne ;
   - le cas échéant, une liste L1 des actions déjà réalisées concernant ladite procédure de traitement de panne ; et
   - le cas échéant, une liste L2 des actions devant encore être réalisées concernant ladite procédure de traitement de panne, en mettant en évidence la prochaine action devant être réalisée ; et
- ledit dispositif de surveillance 1 comporte, de plus, un moyen d'information 8A susceptible d'être actionné par un opérateur (pilote, copilote, ...) et permettant à ce dernier d'informer ladite unité de surveillance 1, le cas échéant, de la réalisation d'au moins une action particulière relative à ladite procédure de traitement de panne.

Ainsi, grâce à l'invention, les différents opérateurs (pilote, copilote, ...) connaissent en permanence de façon précise les actions déjà réalisées (liste L1) et celles devant encore être réalisées (liste L2), et donc l'état d'avancée de la procédure de traitement de panne, sans avoir à mémoriser ces actions, ce qui augmente bien entendu le confort desdits opérateurs dans l'exécution de ces actions, leur permet de focaliser leur attention et leur mémoire sur d'autres informations, et évite des contrôles et/ou des actions non nécessaires.

De plus, les informations qui sont présentées par les moyens d'affichage 4 illustrent précisément l'état de l'avancée effective de la procédure de traitement de panne, puisque, grâce audit moyen d'information 8A, l'opérateur peut informer le dispositif de surveillance 1 de la réalisation le cas échéant de toutes les actions (du type "indétectable") que ce dernier n'aurait pas pu détecter automatiquement. Le dispositif de surveillance 1 sait ainsi précisément quelles sont les actions qui ont été réalisées, soit parce qu'il a effectivement détecté leur réalisation (l'unité de surveillance 3 pouvant détecter de façon usuelle les effets engendrés par la plupart des actions susceptibles d'être réalisées par un opérateur), soit parce que l'opérateur l'a informé des réalisations de ces actions.

Le moyen d'information 8A correspond à un élément d'actionnement tel qu'une touche, un bouton-poussoir ou une molette par exemple, d'un clavier 9 qui est à la disposition de l'opérateur et qui est relié par une liaison 10 à l'unité centrale 3. Ce clavier 9 comporte d'autres éléments d'actionnement 8B à 8L qui sont également actionnables par l'opérateur et que l'on précisera ci-après.

Sur la figure 2, on a représenté un exemple préféré, mais non exclusif, d'un clavier 9 comprenant une pluralité d'éléments d'actionnement, dont certains seront précisés ci-dessous.

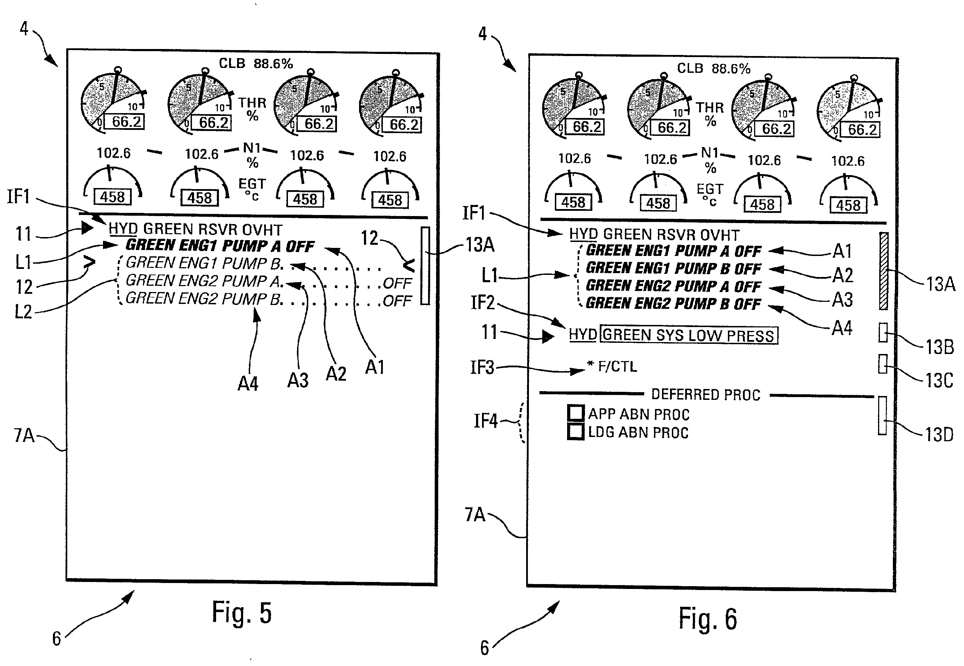

L'information IF1 identifiant la procédure de traitement de panne en cours de réalisation (ou à réaliser) est indiquée et mise en évidence par un moyen approprié 11, par exemple un curseur de forme triangulaire, qui est placé au même niveau que cette information de procédure IF1. Bien entendu, d'autres moyens de mise en évidence peuvent être prévus en complément ou en variante de celui-ci, tels qu'une modification de couleur ou de brillance ou une modification du graphisme par exemple. Selon l'invention, lors de l'existence d'une pluralité de procédures, ledit moyen 11 identifie la procédure qui doit être traitée en priorité, comme représenté sur la figure 6 par exemple.

En même temps qu'ils affichent les informations précitées sur la fenêtre 7A concernant la procédure de traitement de panne, comme représenté sur la figure 3, les moyens d'affichage 4 peuvent présenter, lors de la détection d'une panne, sur la fenêtre 7B, les synoptiques S1 et S2 des systèmes qui sont en panne, comme montré sur la figure 4.

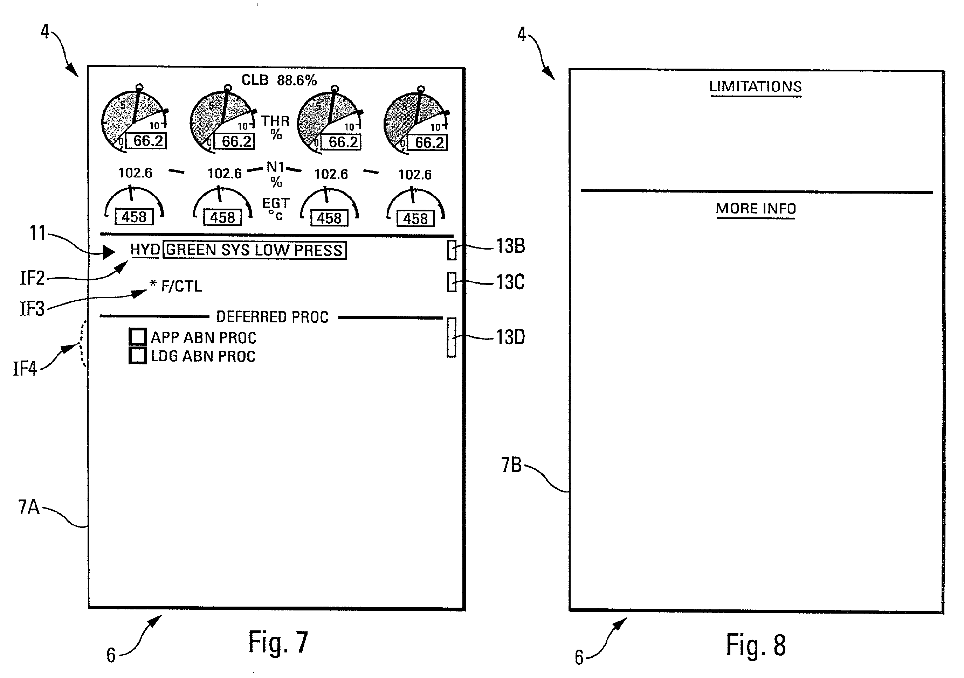

Les figures 3, 5, 6 et 7 illustrent différentes étapes d'un même procédé de traitement de panne. Ainsi :
- à l'étape de la figure 3, la panne d'un système [en l'occurrence, à titre d'illustration, la surchauffe OVHT ("Overheat") du circuit hydraulique] vient d'être détectée et la procédure de traitement de panne IF1, ainsi que la liste L2 des actions A1 à A4 devant encore être réalisées, sont affichées. Ces actions sont, dans le présent exemple, la fermeture des pompes A et B des moteurs 1 et 2. Aucune action n'ayant encore été réalisée, la liste L1 ne contient aucun élément et n'est donc pas affichée. De plus, la prochaine action A1 à réaliser ("GREEN ENG1 PUMP A", c'est-à-dire fermeture de la pompe A du moteur 1) est mise en évidence par un curseur 12 à double flèche. D'autres moyens usuels de mise en évidence sont bien entendu possibles ;
- à l'étape de la figure 5, la première action A1 a été réalisée. La réalisation de cette action A1 permet de créer la liste L1. De plus, sur la fenêtre 7B de l'écran de visualisation 6 visualisant simultanément les synoptiques S1 et S2, la fermeture de la pompe A est mise en évidence, en particulier par un changement de couleur et/ou d'épaisseur des traits du synoptique, comme on peut le voir pour le synoptique S1 sur la figure 4. Sur les figures 3, 5 et 6, les listes L1 et L2 présentent des épaisseurs de trait différentes. On peut bien entendu utiliser d'autres moyens connus (différence de couleurs notamment) pour différencier ces listes L1 et L2. Le curseur 12 est déplacé automatiquement sur l'action suivante A2 à réaliser. Les opérations précitées sont répétées pour toutes les actions A1 à A4 ;
- à l'étape de la figure 6, toutes les actions A1 à A4 de la procédure de traitement de panne IF1 ont été réalisées. La liste L2 a donc disparu. Les moyens d'affichage 4 présentent de plus un indicateur 13A, en l'occurrence une barrette (verticale) pleine qui est prévue à côté des informations IF1 et L1, qui informe l'opérateur du terme (c'est-à-dire de la réalisation complète) de la procédure de traitement de panne IF1. Cet indicateur 13A indique également à l'opérateur que toutes les informations (à savoir la procédure IF1 et la liste L1) qui se trouvent à son niveau peuvent être effacées par ledit opérateur, par l'actionnement d'un moyen d'effacement 8B particulier. Ce moyen d'effacement 8B peut, par exemple, comporter les touches "CLR" de la figure 2. Comme on peut le voir, d'autres indicateurs de ce type 13B, 13C et 13D (barre verticale) sont disposés à côté d'autres informations IF2, IF3 et IF4. Ces indicateurs 13A, 13B, 13C et 13D informent l'opérateur qu'il peut effacer successivement chaque groupe d'informations correspondantes en partant du haut (IF1 et L1, puis IF2, puis IF3, puis IF4), par des actionnements successifs du moyen d'effacement 8B. Ainsi, l'opérateur connaît parfaitement les informations qu'il peut effacer à l'aide dudit moyen d'effacement 8B. Ceci permet d'éviter qu'il n'efface de façon involontaire des informations pouvant être utiles pour la suite du vol. Parmi les indicateurs 13A à 13D, seul l'indicateur 13A est plein, car seule l'opération ou l'information correspondante (IF1 et L1) a été réalisée. On notera que l'information IF2 est une information de panne (absence de pression), panne qui est engendrée par la réalisation des actions A1 à A4 (fermetures des pompes), et l'information IF3 permet d'indiquer les éléments (F/CTL" : "Flight Control", à savoir les gouvernes de pilotage) qui sont touchés par cette panne. Quant à l'information IF4, elle est relative à une procédure différée ("Deferred Proc"), qui sera explicitée ci-dessous ;
- à l'étape de la figure 7, la procédure IF1 et la liste L1 ont été effacées, en réponse à un actionnement (et un seul) du moyen d'effacement 8B.

De plus, selon l'invention, l'unité de surveillance 2 détermine de façon automatique et les moyens d'affichage 4 présentent (également de façon automatique) sur l'écran de visualisation 6, par exemple sur la fenêtre 7B, le cas échéant les nouvelles limitations qui sont engendrées en raison de la panne. Ces nouvelles limitations sont présentées de façon permanente dès qu'elles sont connues (donc pour tout le reste du vol), comme illustré partiellement sur la figure 8 sur laquelle on a juste indiqué l'endroit ("LIMITATIONS") où vont être notées ces limitations, sans en donner d'exemple.

Par ailleurs, selon l'invention, ledit dispositif de surveillance 1 comporte, de plus, un moyen de sélection 8C susceptible d'être actionné par un opérateur et permettant à ce dernier de sélectionner, dans une procédure de traitement de panne conditionnelle qui comprend de façon usuelle une pluralité de conditions, l'une desdites conditions, et lesdits moyens d'affichage 4 présentent sur ledit écran de visualisation 6 les différentes conditions possibles, et éventuellement les actions correspondantes, et mettent en évidence sur ledit écran de visualisation 6, après la sélection d'une condition particulière par l'intermédiaire dudit moyen de sélection 8C, les actions à réaliser pour cette condition. A cet effet, ils peuvent faire apparaître uniquement les actions à réaliser ou bien différencier (par exemple par un jeu de couleurs) les actions à réaliser de celles à ignorer.

Par conséquent, grâce à l'invention, il suffit à l'opérateur de sélectionner la condition appropriée et les moyens d'affichage 4 lui présentent les actions devant être réalisées pour la condition ainsi sélectionnée. La fonction d'aide au traitement de la panne est donc améliorée par la présente invention.

De plus, ledit dispositif de surveillance 1 comporte un moyen d'annulation 8J permettant d'annuler la sélection d'une condition, que vient de faire l'opérateur, dans une procédure de traitement de panne conditionnelle. Pour mettre en oeuvre cette fonction d'annulation, que l'on peut appeler par exemple "UNDO", l'opérateur peut disposer d'une case à cocher □ devant chaque ligne de l'écran correspondant à une condition [IF (...)]. Il sélectionne une condition en cliquant sur une case □. Celle-ci est alors validée et un symbole, tel que ✔, est affiché à l'intérieur de cette case. Pour mettre en oeuvre la fonction "UNDO", le pilote clique sur la case validée contenant ledit symbole ✔, Celle-ci est alors dévalidée et l'affichage dudit symbole est supprimé. La condition correspondante n'est alors plus sélectionnée.

On peut également prévoir un moyen de rappel 8K que l'on peut par exemple appeler "RECALL", susceptible d'être actionné par ledit opérateur et permettant à ce dernier :
- par un premier actionnement, de rappeler à l'écran de visualisation 6 le cas échéant la dernière procédure effacée ; et
- par un second actionnement, de rappeler à l'écran de visualisation 6 le cas échéant l'ensemble des procédures effacées depuis le début du vol de l'aéronef.

Le dispositif de surveillance 1 conforme à l'invention comporte, de plus :
- un moyen d'information 8D précisé ci-dessous, susceptible d'être actionné par ledit opérateur et permettant à ce dernier d'informer ledit dispositif de surveillance 1 de la survenue d'une panne ou d'un incident, qui ne peut pas être détecté par les moyens de surveillance C1 à Cn, mais en revanche par l'équipage, tel que la fissure du pare-brise ou la présence d'une bombe à bord de l'aéronef par exemple ; et
- un moyen d'interrogation 8E susceptible d'être actionné par ledit opérateur et permettant à ce dernier de demander audit dispositif de surveillance 1 que les moyens d'affichage 4 présentent sur ledit écran de visualisation 6 la procédure de traitement de panne relative à cette panne ou cet incident.

De préférence, le moyen d'information 8D est formé de manière à permettre une saisie manuelle de la panne ou de l'incident par l'intermédiaire d'un menu.

De plus, selon l'invention, le dispositif de surveillance 1 tient compte de toutes les pannes, même celles indiquées manuellement par l'opérateur, lorsqu'il dresse le bilan opérationnel de l'aéronef et qu'il calcule les nouvelles limitations.

Pour des raisons de sécurité, on peut prévoir un moyen de validation 8F rendant nécessaire une validation manuelle de la part de l'opérateur, des informations de panne qu'il a entrées dans l'unité centrale 3 par le moyen d'information 8D.

Dans le cadre de la présente invention, ce moyen de validation 8F ou un moyen de validation similaire peut également être prévu pour obliger l'opérateur à réaliser la validation de toutes les informations qu'il a entrées dans le dispositif de surveillance 1 ou au moins une partie de celles-ci, ces informations n'étant alors prises en compte par ledit dispositif de surveillance 1 que si elles ont été effectivement validées par l'opérateur.

Le dispositif de surveillance 1 conforme à l'invention comporte, de plus, un moyen d'interrogation 8G, par exemple la touche "MORE" du clavier 9 de la figure 2, susceptible d'être actionné par ledit opérateur et permettant à ce dernier de demander des informations supplémentaires relatives à une panne. Les moyens d'affichage 4 présentent alors, en réponse à un tel actionnement du moyen d'interrogation 8G, sur ledit écran de visualisation 6, par exemple dans une zone particulière de la fenêtre 7B ayant comme en-tête "More Info", tel que représenté sur la figure 8, des informations supplémentaires relatives à la panne, et en particulier des informations sur la panne, sur ce qui s'est passé et/ou sur les limitations engendrées par cette panne.

Comme indiqué précédemment en référence à la figure 6, les moyens d'affichage 4 peuvent présenter à titre d'information, sur l'écran de visualisation 6, une procédure différée IF4 ("Deferred Proc") comportant des actions devant être réalisées ultérieurement, par exemple lors de l'approche ("APP" : "Approach") ou de l'atterrissage ("LDG" : "Landing"). Ces actions sont présentées (par exemple en gris) de telle sorte que l'opérateur sait qu'elles ne sont pas à réaliser pour le moment.

Toutefois, le dispositif de surveillance 1 comporte un moyen de validation 8H particulier, qui est susceptible d'être actionné par l'opérateur et qui permet à ce dernier de valider ces actions différées [qui peuvent par exemple changer de couleur (bleu) lors de leur validation], pour les réaliser immédiatement à partir de ladite validation.

Ceci permet de réaliser les actions différées (en coopération avec le dispositif de surveillance 1) à tout moment en cas de besoin, par exemple lorsqu'une panne survient pendant l'approche.

Le dispositif de surveillance 1 peut comporter, de plus, un moyen de rappel 8L qui permet de rappeler toutes les actions différées qui ont été effacées de l'écran 6 par les membres d'équipage (pour la clarté de l'affichage) et qui ne sont pas encore exécutées.

Dans un mode de réalisation particulier, le dispositif de surveillance 1 conforme à l'invention comporte, de plus, une base de données 14 représentée sur la figure 1 et comprenant des listes d'opérations à vérifier ou à contrôler (du type "check lists") qui sont susceptibles d'être affichées par les moyens d'affichage 4.

Il s'agit de listes d'opérations à vérifier qui sont généralement établies à partir de préconisations faites par le constructeur de l'avion, et qui sont adaptées aux souhaits spécifiques des compagnies aériennes. Ces listes se trouvent habituellement sur un support papier et leur présentation conformément à l'invention sur l'écran de visualisation 6 permet de faciliter leur lecture et leur exploitation.

Ces listes peuvent être appelées selon deux modes différents :
- soit manuellement par un moyen d'actionnement 81 susceptible d'être actionné par un opérateur ;
- soit automatiquement, notamment en fonction de la phase de vol, par des moyens 15 qui sont intégrés dans le dispositif 1. Ainsi, lorsque, après une durée déterminée dans une phase de vol (par exemple lors de l'approche), dans laquelle des vérifications doivent être réalisées, l'opérateur n'a pas appelé (manuellement) la liste correspondante, les moyens 15 commandent de façon automatique leur présentation sur l'écran 6.

Le dispositif de surveillance 1 conforme à l'invention comporte de plus des moyens 16 qui sont reliés par une liaison 17 à la base de données 14 et qui sont destinés à corriger automatiquement lesdites listes ("check lists") lors d'une panne, afin de tenir compte des effets engendrés par cette panne sur ces listes.

## Revendications

1. Dispositif de surveillance d'une pluralité de systèmes d'un aéronef, ledit dispositif de surveillance (1) comportant au moins :
- une unité de surveillance (2) pour surveiller lesdits systèmes et pour détecter une éventuelle panne d'un desdits systèmes ;
- des moyens d'affichage (4) reliés à ladite unité de surveillance (2) et susceptibles de présenter sur au moins un écran de visualisation (6) des informations relatives à la surveillance desdits systèmes et, lors de la détection d'une panne d'un desdits systèmes, des informations relatives à ladite panne, ainsi qu'au moins une procédure de traitement de panne correspondante comprenant au moins une liste d'actions devant être réalisées par au moins un opérateur, à savoir le cas échéant une liste (L1) des actions déjà réalisées concernant ladite procédure de traitement de panne, et le cas échéant une liste (L2) des actions devant encore être réalisées concernant ladite procédure de traitement de panne, en mettant en évidence (12) la prochaine action devant être réalisée, ainsi qu'un signe caractéristique (13A) signalant le terme d'une procédure de traitement de panne ;
- un moyen d'information (8A) susceptible d'être actionné par ledit opérateur et permettant à ce dernier d'informer ledit dispositif de surveillance (1), le cas échéant, de la réalisation d'au moins une action particulière relative à ladite procédure de traitement de panne ; et
- un moyen de validation (8F) susceptible d'être actionné par ledit opérateur et permettant à ce dernier de valider des informations qu'il a fournies audit dispositif de surveillance (1), des informations précédemment fournies n'étant prises en compte par ledit dispositif de surveillance (1) que si elles ont été effectivement validées par l'opérateur,
**caractérisé en ce que** ledit dispositif de surveillance (1) est un dispositif centralisé du type ECAM, **en ce que** lesdits moyens d'affichage (4) présentent, dès la détection d'une panne et au moins pendant toute la procédure de traitement de panne correspondante, sur ledit écran de visualisation (6), au moins une information (IF1) identifiant ladite procédure de traitement de panne, et **en ce que** ledit dispositif de surveillance (1) comporte de plus :
- un moyen d'effacement (8B) susceptible d'être actionné par ledit opérateur et formé de manière à permettre d'effacer sur ledit écran de visualisation (6) toutes les informations relatives à une procédure de traitement de panne ;
- un moyen d'information (8D) susceptible d'être actionné par ledit opérateur et permettant à ce dernier d'informer ledit dispositif de surveillance (1) de la survenue d'une panne qui ne peut pas être détectée par l'unité de surveillance (2) ; et
- un moyen d'interrogation (8E) susceptible d'être actionné par ledit opérateur et permettant à ce dernier de demander audit dispositif de surveillance (1) que les moyens d'affichage (4) présentent sur ledit écran de visualisation (6) la procédure de traitement de panne relative à la panne signalée à l'aide dudit moyen d'information (8D).

2. Dispositif de surveillance selon la revendication 1,
**caractérisé en ce que** lesdits moyens d'affichage (4) présentent, de façon permanente, sur ledit écran de visualisation (6) les nouvelles limitations à respecter en raison d'une panne, dès que ces nouvelles limitations sont connues.

3. Dispositif de surveillance selon l'une quelconque des revendications 1 et 2,
**caractérisé en ce qu'**il comporte, de plus, un moyen de sélection (8C) susceptible d'être actionné par ledit opérateur et permettant à ce dernier de sélectionner, dans une procédure de traitement de panne conditionnelle comprenant une pluralité de conditions, l'une desdites conditions, et **en ce que** lesdits moyens d'affichage (4) présentent sur ledit écran de visualisation (6) les différentes conditions possibles et mettent en évidence sur ledit écran de visualisation (6), après la sélection d'une condition particulière par l'intermédiaire dudit moyen de sélection (8C), les actions à réaliser pour cette condition.

4. Dispositif de surveillance selon la revendication 3,
**caractérisé en ce qu'**il comporte, de plus, un moyen d'annulation (8J) susceptible d'être actionné par ledit opérateur et permettant à ce dernier d'annuler le cas échéant la sélection antérieure d'une condition dans une procédure de traitement de panne conditionnelle.

5. Dispositif de surveillance selon l'une quelconque des revendications précédentes,
**caractérisé en ce qu'**il comporte, de plus, un moyen d'effacement (8B) susceptible d'être actionné par ledit opérateur et permettant à ce dernier d'effacer des informations présentées sur ledit écran de visualisation (6), et **en ce que** lesdits moyens d'affichage (4) mettent en évidence (13A, 13B, 13C, 13D) sur ledit écran de visualisation (6), parmi les informations qui y sont présentées, celles (IF1, IF2, IF3, IF4) qui sont susceptibles d'être effacées par ledit moyen d'effacement (8B).

6. Dispositif de surveillance selon l'une quelconque des revendications précédentes,
**caractérisé en ce qu'**il comporte, de plus, un moyen d'interrogation (8G) susceptible d'être actionné par ledit opérateur et permettant à ce dernier de demander des informations supplémentaires relatives à une panne, et **en ce que** lesdits moyens d'affichage (4) présentent sur ledit écran de visualisation (6) des informations supplémentaires relatives à une panne, en réponse à un actionnement dudit moyen d'interrogation (8G) par ledit opérateur.

7. Dispositif de surveillance selon l'une quelconque des revendications précédentes,
**caractérisé en ce que** lesdits moyens d'affichage (4) présentent sur ledit écran de visualisation (6), pour une procédure de traitement de panne, le cas échéant des actions différées correspondant à des actions devant être réalisées ultérieurement, et **en ce que** ledit dispositif de surveillance (1) comporte, de plus, un moyen de validation (8H) susceptible d'être actionné par ledit opérateur et permettant à ce dernier de valider à tout moment ces actions différées pour les réaliser immédiatement à partir de ladite validation.

8. Dispositif de surveillance selon l'une quelconque des revendications précédentes,
**caractérisé en ce qu'**il comporte, de plus, une base de données (14) comprenant des listes d'opérations à vérifier et des moyens (15, 8I) permettant de commander lesdits moyens d'affichage (4) pour qu'ils présentent sur ledit écran de visualisation (6) au moins l'une desdites listes d'opérations à vérifier.

9. Dispositif de surveillance selon la revendication 8,
**caractérisé en ce qu'**il comporte des moyens (16) pour corriger automatiquement lesdites listes d'opérations à vérifier, lors d'une panne, pour tenir compte des effets engendrés par cette panne sur ces listes d'opérations à vérifier.

10. Dispositif de surveillance selon l'une quelconque des revendications 8 et 9,
**caractérisé en ce qu'**il comporte un moyen d'actionnement (8I) susceptible d'être actionné par un opérateur pour appeler lesdites listes d'opérations à vérifier.

11. Dispositif de surveillance selon l'une quelconque des revendications 8 et 9,
**caractérisé en ce qu'**il comporte des moyens intégrés (15) pour appeler automatiquement lesdites listes d'opérations à vérifier, en fonction de la phase de vol de l'aéronef.

12. Dispositif de surveillance selon l'une quelconque des revendications précédentes,
**caractérisé en ce qu'**il comporte, de plus, un moyen de rappel (8K) susceptible d'être actionné par ledit opérateur et permettant à ce dernier :
- par un premier actionnement, de rappeler à l'écran de visualisation (6) le cas échéant la dernière procédure effacée ; et
- par un second actionnement, de rappeler à l'écran de visualisation (6) le cas échéant l'ensemble des procédures effacées depuis le début du vol de l'aéronef.

13. Dispositif de surveillance selon l'une quelconque des revendications précédentes,
**caractérisé en ce qu'**il comporte, de plus, un moyen de rappel (8L) susceptible d'être actionné par ledit opérateur et permettant à ce dernier de rappeler à l'écran de visualisation (6) le cas échéant toutes les actions différées qui ont été effacées et qui ne sont pas encore exécutées.

14. Dispositif de surveillance selon l'une quelconque des revendications précédentes,
**caractérisé en ce que** lesdits moyens d'affichage (4) présentent, lors de l'existence d'une pluralité de procédures de traitement de panne, toutes lesdites procédures sur l'écran de visualisation (6) dans un ordre de priorité, et **en ce que** ledit dispositif de surveillance (1) comporte de plus un moyen (11) pour indiquer sur ledit écran de visualisation (6) la procédure à traiter en priorité.

15. Dispositif de surveillance selon l'une quelconque des revendications précédentes,
**caractérisé en ce qu'**il comporte des moyens pour respectivement :
- alerter l'équipage ;
- identifier une panne ;
- vérifier si une passe est isolée ou si d'autres systèmes de l'aéronef sont touchés par cette panne, et le cas échéant, afficher la liste des systèmes qui sont également touchés ;
- afficher la procédure de traitement de panne correspondante ;
- gérer ladite procédure de traitement de panne au fur et à mesure que l'opérateur ou l'équipage effectue différentes actions à réaliser ; et
- lorsque la panne est traitée, afficher un bilan opérationnel de l'aéronef comprenant notamment les limitations à respecter pour la suite du vol, les systèmes et les fonctions qui sont inopérants.

## Patentansprüche

1. Vorrichtung zur Überwachung mehrerer Systeme eines Flugzeugs, wobei die Vorrichtung zur Überwachung (1) mindestens umfasst:
- eine Überwachungseinheit (2), um die Systeme zu überwachen und einen möglichen Ausfall eines dieser Systeme zu erfassen;
- Anzeigemittel (4), die mit der Überwachungseinheit (2) verbunden sind und eingerichtet sind, zumindest auf einem Bildschirm (6) Informationen, die sich auf die Überwachung der Systeme beziehen, und bei Erkennung eines Ausfalls eines der Systeme Informationen, die sich auf den Ausfall beziehen, sowie mindestens eine entsprechende Prozedur zur Behebung des Ausfalls, die zumindest eine Liste von Handlungen umfasst, die von mindestens einem Operator durchgeführt werden müssen, und zwar gegebenenfalls eine Liste (L1) von Handlungen, die bereits hinsichtlich der Prozedur zur Behebung des Ausfalls umgesetzt wurden, und gegebenenfalls eine Liste (L2) der Handlungen, die hinsichtlich der Behebung des Ausfalls noch umgesetzt werden müssen, wobei die nächste Handlung, die durchgeführt werden muss, aufgezeigt (12) wird, sowie ein charakteristisches Signal (13A), das den Wortlaut eines Verfahrens zur Behebung eines Ausfalls signalisiert, darzustellen;
- ein Informationsmittel (8A), das eingerichtet ist, durch den Operator betätigt zu werden, und es dem letzteren gegebenenfalls ermöglicht, die Vorrichtung zur Überwachung (1) über die Umsetzung von mindestens einer bestimmten Handlung, die sich auf die Prozedur zur Behebung des Ausfalls bezieht, zu informieren; und
- ein Validierungsmittel (8F), das eingerichtet ist, von dem Operator betätigt zu werden und es dem letzteren ermöglicht, Informationen, die er an die Vorrichtung zur Überwachung (1) geliefert hat, Information zu validieren, die vorhergeliefert wurden und von der Vorrichtung zu Überwachung (1) nicht berücksichtig wurden, wenn sie nicht tatsächlich von dem Operator validiert wurden,
**dadurch gekennzeichnet, dass** die Vorrichtung zur Überwachung (1) eine zentralisierte Vorrichtung vom Typ ECAM ist, dass die Anzeigemittel (4), seit der Erfassung eines Ausfalls und mindestens während der gesamten Prozedur zur Behebung des entsprechenden Ausfalls auf dem Bildschirm (6) zumindest Information (IF1) darstellt, welche die Prozedur zur Behebung des Ausfalls identifiziert, und dass die Vorrichtung zur Überwachung (1) außerdem aufweist:
- ein Löschmittel (8B), das eingerichtet ist, von dem Operator betätigt zu werden und auf eine Weise ausgebildet ist, die es erlaubt, auf dem Bildschirm (6) alle Informationen auszulöschen, die sich auf eine Prozedur zur Behebung eines Ausfalls beziehen;
- ein Informationsmittel (8D), das eingerichtet ist, von dem Operator betätigt zu werden und es dem letzteren erlaubt, die Vorrichtung zur Überwachung (1) über das Auftreten eines Ausfalls zu informieren, der von der Überwachungseinheit (2) nicht erfasst werden kann; und
- ein Abfragemittel (8E), das eingerichtet ist, von dem Operator betätigt zu werden und des dem letzteren ermöglicht, die Vorrichtung zur Überwachung (1) zu befragen, ob die Anzeigemittel (4) auf dem Bildschirm (6) die Prozedur zur Behebung des Ausfalls, der sich auf den Ausfall bezieht, der mittels des Informationsmittels (8D) signalisiert wurde, darstellen.

2. Vorrichtung zur Überwachung nach Anspruch 1,
**dadurch gekennzeichnet, dass** die Anzeigemittel (4) auf dem Bildschirm (6) auf permanente Weise die neuen Grenzen darstellen, die aufgrund eines Ausfalls respektiert werden müssen, sobald die neuen Grenzen bekannt sind.

3. Vorrichtung zur Überwachung nach einem der Ansprüche 1 und 2,
**dadurch gekennzeichnet, dass** sie außerdem Auswahlmittel (8C) umfasst, die eingerichtet sind, von dem Operator betätigt zu werden, und es dem letzteren in einer bedingten Prozedur zur Behebung eines Ausfalls, der mehrere Bedingungen umfasst, ermöglichen, eine der Bedingungen auszuwählen, und dass die Anzeigemittel (4) auf dem Bildschirm (6) die unterschiedlichen, möglichen Bedingungen darstellen und auf dem Bildschirm (6) nach der Auswahl einer bestimmten Bedingung mittels des Auswahlmittels (8C) die Handlungen, die für diese Bedingung umgesetzt werden müssen, aufzeigen.

4. Vorrichtung zur Überwachung nach Anspruch 3,
**dadurch gekennzeichnet, dass** sie außerdem ein Stornierungsmittel (8J) umfasst, das eingerichtet ist, von dem Operator betätigt zu werden, und es dem letzteren ermöglicht, gegebenenfalls eine vorherige Auswahl einer Bedingung in einer Prozedur zur Behebung eines bedingten Ausfalls zu stornieren.

5. Vorrichtung zur Überwachung nach einem der vorhergehenden Ansprüche,
**dadurch gekennzeichnet, dass** sie außerdem Löschmittel (8B) umfasst, die eingerichtet sind, von dem Operator betätigt zu werden und es dem letzteren ermöglichen, Informationen zu löschen, die auf dem Bildschirm (6) dargestellt werden, und dass die Anzeigemittel (4) auf dem Bildschirm (6) unter den Informationen, die dort dargestellt sind, diejenigen (IF1, IF2, IF3, IF4) aufzeigen (13A, 13B,
13C, 13D), die eingerichtet sind, durch das Löschmittel (8B) gelöscht zu werden.

6. Vorrichtung zur Überwachung nach einem der vorhergehenden Ansprüche,
**dadurch gekennzeichnet, dass** sie außerdem eine Abfrageeinrichtung (8G) umfasst, die eingerichtet ist, durch den Operator betätigt zu werden und es dem letzteren ermöglicht, zusätzliche Informationen, die sich auf einen Ausfall beziehen, abzufragen, und dass die Anzeigemittel (4), die auf dem Bildschirm (6) zusätzliche Informationen, die sich auf einen Ausfall beziehen, als Reaktion auf eine Betätigung des Abfragemittels (8G) durch den Operator darstellen.

7. Vorrichtung zur Überwachung nach einem der vorhergehenden Ansprüche,
**dadurch gekennzeichnet, dass** die Anzeigemittel (4) auf dem Bildschirm (6) für eine Prozedur zur Behebung eines Ausfalls gegebenenfalls unterschiedliche Handlungen darstellen, die Handlungen entsprechen, die später umgesetzt werden müssen, und dass die Vorrichtung zur Überwachung (1) außerdem ein Validierungsmittel (8H) aufweist, das eingerichtet ist, durch den Operator betätigt zu werden, und es dem letzteren ermöglicht, jederzeit diese unterschiedlichen Handlungen ausgehend von der Validierung umzusetzen.

8. Vorrichtung zur Überwachung nach einem der vorhergehenden Ansprüche,
**dadurch gekennzeichnet, dass** sie außerdem eine Datenbank (14), die Listen mit zu überprüfenden Operationen umfasst, und Mittel (15, 81) umfasst, die es ermöglichen, die Anzeigemittel (4) zu steuern, damit sie auf dem Bildschirm (6) zumindest eine der Liste der zu überprüfenden Operationen darstellen.

9. Vorrichtung zur Überwachung nach Anspruch 8,
**dadurch gekennzeichnet, dass** sie Mittel (16) umfasst, um automatisch die Listen von zu überprüfenden Operationen während eines Ausfalls zu korrigieren, um die Effekte, die von dem Ausfalls auf der Liste der zu überprüfenden Operationen verursacht werden, zu berücksichtigen.

10. Vorrichtung zur Überwachung nach einem der vorhergehenden Ansprüche 8 und 9,
**dadurch gekennzeichnet, dass** sie ein Betätigungsmittel (8I) umfasst, das eingerichtet ist, von dem Operator betätigt zu werden, um die Listen mit zu überprüfenden Operationen aufzurufen.

11. Vorrichtung zur Überwachung nach einem der Ansprüche 8 und 9,
**dadurch gekennzeichnet, dass** sie integrierte Mittel (15) umfasst, um automatisch die Listen mit zu überprüfenden Operationen als Funktion der Phase des Flugs des Flugzeugs aufzurufen.

12. Vorrichtung zur Überwachung nach einem der vorhergehenden Ansprüche,
**dadurch gekennzeichnet, dass** sie außerdem ein Erinnerungsmittel (8K) umfasst, das eingerichtet ist, von dem Operator betätigt zu werden und es dem letzteren ermöglicht:
- durch eine erste Betätigung auf dem Bildschirm (6) gegebenenfalls an die letzte gelöschte Prozedur zu erinnern; und
- durch eine zweite Betätigung auf dem Bildschirm (6) gegebenenfalls an sämtliche, seit dem Beginn des Flugs des Flugzeugs gelöschte Prozeduren zu erinnern.

13. Vorrichtung zur Überwachung nach einem der vorhergehenden Ansprüche,
**dadurch gekennzeichnet, dass** sie außerdem ein Erinnerungsmittel (8L) umfasst, das eingerichtet ist, von dem Operator betätigt zu werden und es dem letzteren ermöglicht, auf dem Bildschirm (6) gegebenenfalls an alle unterschiedlichen Handlungen zu erinnern, die gelöscht wurden und die noch nicht ausgeführt wurden.

14. Vorrichtung zur Überwachung nach einem der vorhergehenden Ansprüche,
**dadurch gekennzeichnet, dass** die Anzeigemittel (4) während des Vorhandenseins von mehreren Prozeduren zur Behebung des Ausfalls alle Prozeduren auf dem Bildschirm (6) in einer Reihenfolge der Priorität darstellen, und dass die Überwachungsvorrichtung (1) außerdem ein Mittel (11) umfasst, um auf dem Bildschirm (6) die mit Priorität zu verarbeitende Prozedur anzeigt.

15. Vorrichtung zur Überwachung nach einem der vorhergehenden Ansprüche,
**dadurch gekennzeichnet, dass** sie Mittel umfasst, um jeweils:
- die Besatzung zu warnen;
- einen Ausfall zu identifizieren;
- zu überprüfen, ob ein Geschehen isoliert ist oder ob weitere Systeme des Flugzeugs von dem Ausfall betroffen sind, und gegebenenfalls die Liste der Systeme, die ebenfalls betroffen sind, anzuzeigen;
- die Prozedur zur Behebung des entsprechenden Ausfalls anzuzeigen;
- die Prozedur zur Behebung des Ausfalls in dem Maße auszuführen, wie der Operator oder die Besatzung unterschiedliche, umzusetzende Handlungen ausführen; und
- während der Ausfall behoben wird, eine Operationsuntersuchung des Flugzeugs anzuzeigen, die insbesondere die zu respektierenden Grenzen für den weiteren Flug, die Systeme und Funktionen, die nicht funktionieren, umfasst.

## Claims

1. A device for monitoring a plurality of systems of an aircraft, the said monitoring device (1) including at least:
- a monitoring unit (2) for monitoring the said systems and for detecting any failure of one of the said systems; and
- display means (4) linked to the said monitoring unit (2) and capable of presenting, on at least one visual-display screen (6), information relating to the monitoring of the said systems, and, upon detection of a failure of one of the said systems, information relating to the said failure, as well as at least one corresponding failure-handling procedure comprising at least a list of actions having to be carried out by at least one operator; namely if appropriate, a list (L1) of the actions already carried out relating to the said failure-handling procedure; and if appropriate, a list (L2) of the actions still having to be carried out relating to the said failure-handling procedure, highlighting (12) the next action having to be carried out, as well as one characteristic sign (13A) signalling the completion of this failure-handling procedure;
- an information means (8A) capable of being actuated by the said operator and allowing the latter to inform the said monitoring device (1), if appropriate, of the carrying-out of at least one particular action relating to the said failure-handling procedure;
- a validation means (8F) capable of being actuated by the said operator and allowing the latter to validate information which he has supplied to the said monitoring device (1), information previously supplied not being taken into account by the said monitoring device (1) unless it has actually been validated by the operator,
**characterized in that** the said monitoring (1) is a centralized device of the ECAM type, **in that** the said display means (4), upon detection of a failure and at least throughout the corresponding failure-handling procedure, display, on the said visual-display screen (6), at least an information (IF1) identifying the said failure-handling procedure, and **in that** the said monitoring device (1) further includes :
- a deletion means (8B) capable of being actuated by the said operator and allowing the latter to delete from the said visual-display screen (6) all the information relating to a failure-handling procedure;
- an information means (8D) capable of being actuated by the said operator and allowing the latter to inform the said monitoring device (1) of the occurrence of a failure that cannot be detected by the monitoring unit(2); and
- an interrogation means (8E) capable of being actuated by the said operator and allowing the latter to ask the said monitoring device (1) to have the display means (4) present, on the said visual-display screen (6), the failure-handling procedure relating to the said failure.

2. The monitoring device as claimed in claim 1,
**characterized in that** the said display means (4) continuously present, on the said visual-display screen (6) the new limitations to be complied with by reason of a failure, as soon as these new limitations are known.

3. The monitoring device as claimed in one of claims 1 and 2,
**characterized in that** it further includes a selection means (8C) capable of being actuated by the said operator and allowing the latter, in a conditional failure-handling procedure comprising a plurality of conditions, to select one of the said conditions, and **in that** the said display means (4) present, on the said visual-display screen (6), the various possible conditions and highlight the actions to be carried out for a particular condition, on the said visual-display screen (6), after the selection of this condition by way of the said selection means (8C).

4. The monitoring device as claimed in claim 3,
**characterized in that** it further includes a cancellation means (8J) capable of being actuated by the said operator and allowing the latter, if appropriate, to cancel the previous selection of a condition in a conditional failure-handling procedure.

5. The monitoring device according to any one of the preceding claims,
**characterized in that** it further includes a deletion means (8B) capable of being actuated by the said operator and allowing the latter to delete information presented on the said visual-display screen (6), and wherein the said display means (4) highlight (13A, 13B, 13C, 13D), on the said visual-display screen (6), among the information which is presented there, the information (IF1, IF2, IF3, IF4) which is capable of being deleted by the said deletion means (8B).

6. The monitoring device according to any one of the preceding claims,
**characterized in that** it further includes an interrogation means (8G) capable of being actuated by the said operator and allowing the latter to request supplementary information relating to a failure, and **in that** the said display means (4) present, on the said visual-display screen (6), supplementary information relating to a failure, in response to an actuation of the said interrogation means (8G) by the said operator.

7. The monitoring device as claimed in any one of the preceding claims,
**characterized in that** the said display means (4) present, on the said visual-display screen (6), for a failure-handling procedure, if appropriate, deferred actions corresponding to actions having to be carried out subsequently, and **in that** the said monitoring device (1) further includes a validation means (8H) capable of being actuated by the said operator and allowing the latter to validate these deferred actions so as to carry them out upon the said validation.

8. The monitoring device as claimed in any one of the preceding claims,
**characterized in that** it further includes a database (14) comprising lists of operations to be verified and means (15, 8I) making it possible to control the said display means (4) so that they present, on the said visual-display screen (6), at least one of the said lists of operations to be verified.

9. The monitoring device as claimed in claim 8,
**characterized in that** it includes means (16) for automatically correcting the said lists of operations to be verified, upon a failure, so as to take into account effects generated by this failure on these lists of operations to be verified.

10. The monitoring device as claimed in any one of claims 8 and 9,
**characterized in that** it further includes an actuation means (8F) capable of being actuated by the said operator for calling the said lists to monitor.

11. The monitoring device as claimed in any one of claims 8 and 9,
**characterized in that** it includes incorporated means (15) for automatically calling up the list of actions to monitor on the basis of the phase of flight.

12. The monitoring device as claimed in any one of the preceding claims,
**characterized in that** it further includes a recall means (8K) capable of being actuated by the said operator and allowing the latter:
- by a first actuation, to recall to the visual-display screen (6), if appropriate, the last procedure deleted; and
- by a second actuation, to recall to the visual-display screen (6), if appropriate, all the procedures deleted since the start of the flight of the aircraft.

13. The monitoring device as claimed in any one of the preceding claims,
**characterized in that** it further includes a recall means (8L) capable of being actuated by the said operator and allowing the latter to recall to the visual-display screen (6), if appropriate, all the deferred actions which have been deleted and which have not yet been carried out.

14. The monitoring device as claimed in any one of the preceding claims,
**characterized in that** the said display means (4), while a plurality of fault-handling procedures exist, display all the said procedures on the visual-display screen (6) in an order of priority, and the said monitoring device (1) further including a means (11) for indicating, on the said visual-display screen (6), the procedure to be dealt with in priority.

15. The monitoring device as claimed in any one of the preceding claims,
**characterized in that** it includes means for respectively:
- alerting the crew;
- identifying a failure;
- checking whether the failure is isolated or whether other systems of the aircraft are affected by this failure and, if appropriate, displaying the list of the systems which are also affected;
- displaying the corresponding failure-handling procedure;
- managing the failure-handling procedure as and when the operator or the crew carry out the various actions; and
- when the failure has been dealt with, displaying an operational status report on the airplane especially comprising the limitations to be complied with for the remainder of the flight, the systems and the functions which are inoperative.
